# EUROPÄISCHE PATENTSCHRIFT

(11) **EP 1 184 527 B1**
(45) Veröffentlichungstag und Bekanntmachung des Hinweises auf die Patenterteilung: **28.07.2004**
(21) Anmeldenummer: 00118973.7
(22) Anmeldetag: 01.09.2000
(51) Int. Cl.: E04F 15/04, F16B 5/00

(54) **Paneel für einen Parkettboden und Verfahren zur Herstellung eines Paneels für einen Parkettboden**
A parquet floor panel and method for manufacturing a panel for a parquet floor
Panneau pour parquet et procédé de fabrication d'un panneau pour parquet

(43) Veröffentlichungstag der Anmeldung: 06.03.2002
(73) Patentinhaber: Schulte, Johannes, 59602 Rüthen-Meiste (DE)
(72) Erfinder: Schulte, Johannes, 59602 Rüthen-Meiste (DE)
(74) Vertreter: Bockermann, Rolf, Dipl.-Ing.

(56) Entgegenhaltungen:
- WO-A-99/66152
- DE-A- 3 343 601
- US-A- 5 295 341

## Beschreibung

Es zählt bei einem aus Paneelen zusammengesetzten Laminatfußboden zum Stand der Technik, an den Seiten der Paneele Rastaufnahmen sowie an die Rastaufnahmen angepasste Rastzungen vorzusehen, um eine im Prinzip spaltfreie Oberfläche zu erzielen. In diesem Zusammenhang wird beispielsweise auf die US-PS 4,426,820 oder die EP 0 843 763 (=WO 97/47834A) verwiesen. Bei diesen bekannten Vorschlägen sind die Rastzungen und Rastaufnahmen in einer den überwiegenden Teil der Dicke eines Paneels bildenden Schicht aus einem sogenannten HDF-Material (hochverdichtete Faserplatte) ausgeformt. Ein derartiges Material gewährleistet ein einwandfreies Zusammenwirken der Rastzungen mit den Rastaufnahmen.

Dieses bei Laminatfußböden bewährte Prinzip konnte bislang auf Parkettböden nicht übertragen werden. Parkettböden setzen sich aus Paneelen zusammen, welche jeweils aus einer Trittschicht aus einem Hartholz und einer Zwischenschicht sowie einer einen Gegenzug bildenden Basisschicht aus gegenüber dem Material der Trittschicht weicheren Hölzern bestehen.

Außerdem macht die Dicke der Zwischenschicht die überwiegende Dicke eines solchen Paneels aus. Wollte man also das von Laminatfußböden her bekannte Prinzip von Rastzunge und Rastaufnahme auf das Paneel eines Parkettbodens übertragen, so wäre es erforderlich, Rastzunge und Rastaufnahme in der vergleichsweise weichen Zwischenschicht auszubilden. Hiermit ist jedoch die Standfestigkeit des Parkettbodens mit absolut spaltfreier Oberfläche nicht erzielbar. Den auf ein Paneel einwirkenden Beanspruchungen sowohl bei der Montage als auch im verlegten Zustand eines Parkettbodens könnte die weiche Zwischenschicht nicht standhalten, so dass insbesondere die das schwächste Glied der Verbindung darstellenden Randrippen der Rastaufnahmen brechen und/oder abscheren würden.

Der Erfindung liegt ausgehend vom Stand der Technik die Aufgabe zugrunde, das bei Laminatfußböden an einem Paneel bekannte und bewährte Prinzip von Rastzunge und Rastaufnahme auch auf einen Parkettboden übertragen zu können.

Was die gegenständliche Lösung der der Erfindung zugrundeliegenden Aufgabe anlangt, so wird diese in den Merkmalen des Patentanspruchs 1 gesehen.

Kerngedanke der Erfindung bildet die Maßnahme, die Rastaufnahme an einem Paneel für einen Parkettboden nunmehr in einer Leiste auszubilden, welche in der Zwischenschicht festgelegt ist, somit einen Bestandteil der Unterwange des Paneels darstellt und aus einem im Vergleich zum Material der Zwischenschicht härteren Material gebildet ist. Das Material der Leiste kann MDF-Material (mitteldichte Faserplatte) oder HDF-Material (hochverdichtete Faserplatte) sein. Ein derartiges Material stellt sicher, dass die eine Rastaufnahme am freien Ende begrenzende Rippe im Zusammenwirken mit einer Rastzunge eines zweiten Paneels weder abbrechen noch abscheren kann. Bei jeder Rastverbindung zweier Paneele wirkt somit eine Rastzunge aus dem Material der im Vergleich zur Trittschicht weicheren Zwischen-schicht mit einer Rastaufnahme in einer Leiste aus einem demgegenüber härteren Material zusammen. Die Rastzunge kann deshalb aus dem Material der weicheren Zwischenschicht gebildet sein, weil sie in allen Bereichen einen stets ausreichenden stabilen Querschnitt aufweist.

Die Integration der Leiste in die Zwischenschicht kann darüberhinaus so vorgenommen werden, dass die Elastizität des die Leiste aufnehmenden Randbereichs des Paneels in vertikaler Richtung ausreichend groß genug ist, um das Zusammenfügen zweier Paneele in einer Horizontalebene zu erlauben. Das heißt, es ist nicht notwendig, dass bei der Montage eines Parkettbodens die Paneele durch kombinierte Schub- und Schwenkbewegungen über die Rastzungen und Rastaufnahmen miteinander gefügt werden.

Entsprechend einer vorteilhaften Weiterbildung des erfindungsgemäßen Grundgedankens ist nach Patentanspruch 2 die Leiste dünner als die im Vergleich zur Trittschicht und zur Basisschicht dickere Zwischenschicht ausgebildet. Diese Maßnahme trägt auf der einen Seite dazu bei, in der Leiste und zum geringen Teil auch in der Zwischenschicht die Rastaufnahme auszuformen und andererseits dennoch eine einwandfreie Verrastung zweier Paneele sicherzustellen.

Es hat sich bei internen Versuchen als vorteilhaft herausgestellt, wenn entsprechend den Merkmalen des Patentanspruchs 3 die Leiste unter einem Winkel von etwa 15° zur Oberfläche der Trittschicht verläuft. Auf diese Weise ist eine einwandfreie Verrastung von Rastaufnahme und Rastzunge sichergestellt.

Nach Patentanspruch 4 ist die Leiste in einer randseitigen Nute der Zwischenschicht festgelegt. Die Nute kann insbesondere eingesägt oder eingefräst sein.

Um die Verklammerung der Leiste in der Nute noch weiter zu verbessern, ist nach Patentanspruch 5 vorgesehen, dass die Nute einen sich zur Mündung hin verengenden keilförmigen Querschnitt aufweist.

Damit möglichst alle schädlichen Beanspruchungen von der Zwischenschicht und auch der Basisschicht abgehalten werden, sieht Patentanspruch 6 in vorteilhafter Weise vor, dass die Unterseite der Leiste in die Unterseite der Basisschicht einläuft und mit ihrer Stirnseite die Stirnseite der Unterwange der Rastaufnahme bildet.

Die Leiste ist gemäß den Merkmalen des Patentanspruchs 7 bevorzugt durch Leimung in der Zwischenschicht festgelegt.

Hinsichtlich des verfahrensmäßigen Teils der der Erfindung zugrundeliegenden Aufgabe besteht die Lösung in den Merkmalen des Patentanspruchs 8.

Danach wird, wie auch schon bisher, jedes Paneel zunächst hinsichtlich der oberen Trittschicht aus Hartholz mit einer Zwischenschicht sowie einer Basisschicht aus gegenüber dem Material der Trittschicht weicheren Hölzern gefügt. Im Anschluss daran wird in zumindest einer Seite des Paneels eine geneigt zur Oberfläche der Trittschicht verlaufende Nute randseitig hergestellt. Die Neigung der Nute verläuft von der Trittschicht in Richtung zur Basisschicht. In diese Nute wird dann eine Leiste eingesetzt, die aus einem Material besteht, das härter als die Zwischenschicht ist. Bei diesem Material kann es sich bevorzugt um MDF-Material (mitteldichte Faserplatte) oder HDF-Material (hochverdichtete Faserplatte) handeln. Nach der Fixierung der Leiste in der Nute können dann hinsichtlich der einzelnen Arbeitsschritte parallel nebeneinander oder nacheinander an einer Seite des Paneels die Rastzunge aus der Zwischenschicht und aus der Leiste die Rastaufnahme erzeugt werden. Durch die Herstellung der Rastaufnahme werden dann an dieser Seite des Paneels eine Oberwange und eine Unterwange gebildet, wobei die Unterwange zumindest begrenzt federnd elastische Eigenschaften aufweisen kann.

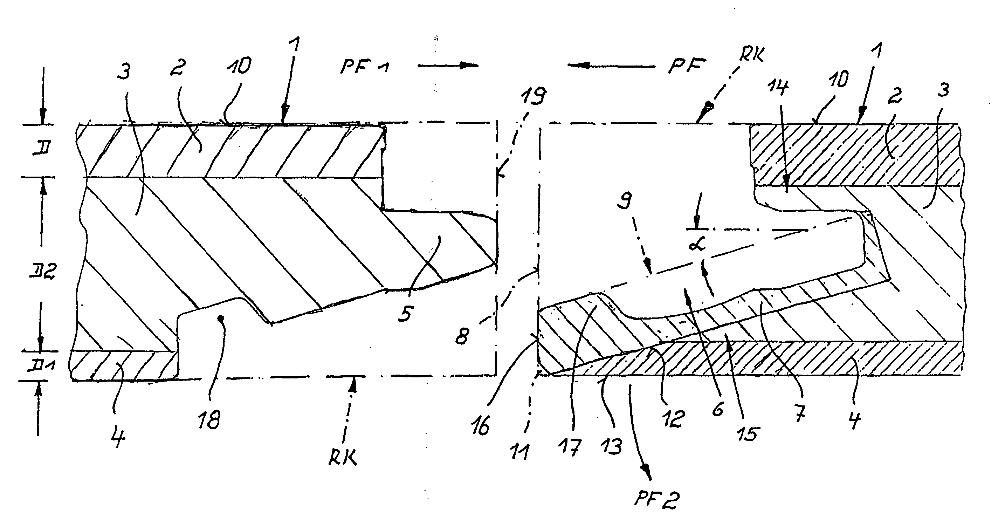

Die Erfindung ist nachfolgend anhand eines in der Zeichnung veranschaulichten Ausführungsbeispiels näher erläutert.

Mit 1 sind in der Zeichnung zwei Paneele für einen Parkettboden bezeichnet. Die Paneele 1 sind dreischichtig aufgebaut. Jedes Paneel 2 umfasst eine obere Trittschicht 2 aus einem Hartholz, wie beispielsweise Buche, Eiche oder Ahorn. An die Trittschicht 2 schließt sich eine gegenüber der Dicke D der Trittschicht 2 dickere Zwischenschicht 3 aus einem gegenüber dem Material der Trittschicht 2 weicheren Holz, wie beispielsweise Fichte, an. Auf der anderen Seite der Zwischenschicht 3 ist eine Basisschicht 4 ebenfalls aus einem gegenüber dem Material der Trittschicht 2 weicheren Material, wie z.B. Fichte, vorgesehen. Die Dicke D1 der Basisschicht 4 ist kleiner als die Dicke D2 der Zwischenschicht 3 bemessen.

Die Trittschicht 2 ist mit der Zwischenschicht 3 und die Zwischenschicht 3 ist mit der Basisschicht 4 verleimt.

Um zwei Paneele 1 spaltfrei problemlos miteinander verbinden zu können, ist an der einen Seite 19 des Rohkörpers RK eines Paneels 1 eine Rastzunge 5 aus der Zwischenschicht 3 geformt.

Auf der gegenüberliegenden Seite 8 weist jedes Paneel 1 eine an die Rastzunge 5 angepasste Rastaufnahme 6 auf. Die Rastaufnahme 6 ist zum überwiegenden Teil in einer Leiste 7 ausgebildet und nur zum geringen Teil in dem Material der Zwischenschicht 3. Die Leiste 7 besteht aus einem gegenüber dem Material der Zwischenschicht 3 härteren Material, wie beispielsweise MDF-Material (mitteldichte Faserplatte) oder HDF-Material (hochverdichtete Faserplatte).

Zur Herstellung der Rastaufnahme 6 wird zunächst in den Rohkörper RK des Paneels 1, bestehend aus der Trittschicht 2, der Zwischenschicht 3 und der Basisschicht 4, von der Seite 8 her eine in strichpunktierter Linienführung angedeutete Nute 9 eingearbeitet, die unter einem Winkel α von 15° zur Oberfläche 10 der Trittschicht 2 verläuft. Die Nute 9 ist leicht keilförmig ausgebildet, wobei sie sich zur Mündung 11 in der Seite 8 hin verengt.

Nach der Fertigung der Nute 9 wird in diese die Leiste 7 eingesetzt und verleimt. Ihre Unterseite 12 läuft in die Unterseite 13 der Basisschicht 4 ein.

Danach wird durch eine spanabhebende Bearbeitung von Trittschicht 2, Zwischenschicht 3 und Leiste 7 die Rastaufnahme 6 geformt, wodurch oberhalb der Rastaufnahme 6 eine Oberwange 14 und unterhalb der Rastaufnahme 6 eine Unterwange 15 gebildet werden. Die Stirnseite 16 der Leiste 7 bildet dann zugleich die Stirnseite der Unterwange 15.

Beim Zusammenfügen von zwei Paneelen 1 gemäß den Pfeilen PF und PF1 fasst die Rastzunge 5 in die Rastaufnahme 6, wobei die endseitig der Leiste 7 ausgebildete Rippe 17 nach vorübergehender Ausbiegung der Unterwange 15 gemäß dem Pfeil PF2 dann in die rückwärtig der Rastzunge 5 im anderen Paneel 1 ausgebildete Ausnehmung 18 einfedert, so dass die beiden Paneele 1 zug- und druckfest miteinander verbunden sind.

### Bezugszeichenaufstellung

- 1 -: Paneele
- 2 -: Trittschicht
- 3 -: Zwischenschicht
- 4 -: Basisschicht
- 5 -: Rastzunge
- 6 -: Rastaufnahme
- 7 -: Leiste mit 6
- 8 -: Seite v. 1
- 9 -: Nute f. 7
- 10 -: Oberfläche v. 2
- 11 -: Mündung v. 9
- 12 -: Unterseite v. 7
- 13 -: Unterseite v. 4
- 14 -: Oberwange
- 15 -: Unterwange
- 16 -: Stirnseite v. 7
- 17 -: Rippe an 7
- 18 -: Ausnehmung in 5
- 19 -: Seite v. 1

- α -: Winkel v. 9
- D -: Dicke v. 2
- D1 -: Dicke v. 4
- D2 -: Dicke v. 3
- PF -: Pfeil
- PF1 -: Pfeil
- PF3 -: Pfeil
- RK -: Rohkörper v. 1

## Patentansprüche

1. Paneel für einen Parkettboden, das aus einer Trittschicht (2) aus einem Hartholz und einer Zwischenschicht (3) sowie einer einen Gegenzug bildenden Basisschicht (4) aus gegenüber dem Material der Trittschicht (2) weicheren Hölzern zusammengesetzt ist, und welches an mindestens einer Seite (19) eine durchgehende Rastzunge (5) und an der gegenüberliegenden Seite (8) eine an die Rastzunge (5) angepasste Rastaufnahme (6) aufweist, wobei die Rastzunge (5) aus dem Material der Zwischenschicht (3) geformt und die Rastaufnahme (6) im wesentlichen in einer in der Zwischenschicht (3) festgelegten Leiste (7) aus einem im Vergleich zur Zwischenschicht (3) härteren Material ausgebildet sind.

2. Paneel nach Patentanspruch 1, bei welchem die Leiste (7) dünner als die im Vergleich zur Trittschicht (2) und zur Basisschicht (4) dickere Zwischenschicht (3) ausgebildet ist.

3. Paneel nach Patentanspruch 1 oder 2, bei welchem die Leiste (7) unter einem Winkel (α) von etwa 15° zur Oberfläche (10) der Trittschicht (2) verläuft.

4. Paneel nach einem der Patentansprüche 1 bis 3, bei welchem die Leiste (7) in einer in der Zwischenschicht (3) randseitig eingebrachten Nute (9) festgelegt ist.

5. Paneel nach Patentanspruch 4, bei welchem die Nute (9) einen sich zur Mündung (11) hin verengenden keilförmigen Querschnitt aufweist.

6. Paneel nach einem der Patentansprüche 1 bis 5, bei welchem die Unterseite (12) der Leiste (7) in die Unterseite (13) der Basisschicht (4) einläuft und mit ihrer Stirnseite (16) die Stirnseite der Unterwange (15) der Rastaufnahme (6) bildet.

7. Paneel nach einem der Patentansprüche 1 bis 6, bei welchem die Leiste (7) durch Leimung in der Zwischenschicht (3) festgelegt ist.

8. Verfahren zur Herstellung eines Paneels (1) für einen Parkettboden, bei welchem nach dem Fügen einer Trittschicht (2) aus Hartholz mit einer Zwischenschicht (3) sowie einer Basisschicht (4) aus gegenüber dem Material der Trittschicht (2) weicheren Hölzern an mindestens einer Seite (19) des Paneels (1) aus der Zwischenschicht (3) eine Rastzunge (5) geformt und an der gegenüber liegenden Seite (8) eine geneigt zur Oberfläche (10) der Trittschicht (2) verlaufende Nute (9) randseitig hergestellt wird, in die anschließend eine Leiste (7) aus einem gegenüber dem Material der Zwischenschicht (3) härteren Material eingesetzt und befestigt wird, worauf durch eine spanabhebende Bearbeitung der Zwischenschicht (3) und der Leiste (7) eine an die Rastzunge (5) angepasste Rastaufnahme (6) hergestellt wird.

## Claims

1. A panel for a parquet floor made up of a tread layer (2) of a hardwood and an intermediate layer (3) and counteracting means in the form of a base layer (4) of woods softer than the material of the tread layer (2), and which, on at least one side (19), has a continuous catch tongue (5) and, on the opposite side (8), a catch recess (6) adapted to the catch tongue (5), wherein the catch tongue (5) is formed from the material of the intermediate layer (3) and the catch recess (6) is formed substantially in a strip (7) which is fixed in the intermediate layer (3) and which consists of a harder material than the intermediate layer (3).

2. A panel according to claim 1, wherein the strip (7) is thinner than the intermediate layer (3), which latter is thicker than the tread layer (2) and the base layer (4).

3. A panel according to claim 1 or 2, wherein the strip (7) extends at an angle (α) of about 15° to the surface (10) of the tread layer (2).

4. A panel according to any one of claims 1 to 3, wherein the strip (7) is fixed in a groove (9) formed at the edge of the intermediate layer (3).

5. A panel according to claim 4, wherein the groove (9) has a wedge-shaped cross-section narrowing towards the opening (11).

6. A panel according to any one of claims 1 to 5, wherein the underside (12) of the strip (7) runs into the underside (13) of the base layer (4) and with its end face (16) forms the end face of the bottom cheek (15) of the catch recess (6).

7. A panel according to any one of claims 1 to 6, wherein the strip (7) is fixed in the intermediate layer (3) by gluing.

8. A method of making a panel (I) for a parquet floor, wherein a tread layer (2) of hardwood is first joined to an intermediate layer (3) and to a base layer (4) of woods which are softer than the material of the tread layer (2) and then there is formed on at least one side (19) of the panel (1) from the intermediate layer (3) a catch tongue (5) and a groove (9) extending at an angle to the surface (10) of the tread layer (2) is formed at the edge on the opposite side (8), into which groove there is then inserted and fixed a strip (7) of a harder material than the material of the intermediate layer (3), whereupon a catch recess (6) adapted to the catch tongue (5) is made by chip-removal machining of the intermediate layer (3) and of the strip (7).

## Revendications

1. Panneau pour parquet qui est composé d'un revêtement de marche (2) en bois dur et d'un revêtement intermédiaire (3) ainsi que d'un revêtement de base (4) formant une contremarche à partir de bois plus mous par rapport au matériau du revêtement de marche (2), et qui sur au moins un côté (19) présente une languette d'arrêt continue (5) et sur le côté opposé (8) un logement d'arrêt (6) adapté à la languette d'arrêt (5), dans lequel la languette d'arrêt (5) est formée à partir du matériau de la couche intermédiaire (3) et le logement d'arrêt (6) est formé essentiellement dans un listel (7) fixé dans la couche intermédiaire (2) à partir d'un matériau plus dur par rapport à la couche intermédiaire (3).

2. Panneau selon la revendication 1, dans lequel le listel est formé plus fin que la couche intermédiaire (3) plus épaisse par rapport au revêtement de marche (2) et à la couche de base (4).

3. Panneau selon la revendication 1 ou 2, dans lequel le listel (7) s'étend selon un angle (α) d'environ 15° par rapport à la surface (10) du revêtement de marche (2).

4. Panneau selon l'une des revendications 1 à 3, dans lequel le listel (7) est fixé dans une gorge (9) ménagée en marge dans la couche intermédiaire (3).

5. Panneau selon la revendication 4, dans lequel la gorge (9) présente une section transversale en forme de coin allant en se rétrécissant en direction de l'embouchure (11).

6. Panneau selon l'une des revendications 1 à 5, dans lequel le côté inférieur (12) du listel (7) s'engage dans le côté inférieur (13) de la couche de base (4) et avec son côté frontal (16) forme le côté frontal de la joue inférieure (15) du logement d'arrêt (6).

7. Panneau selon l'une des revendications 1 à 6, dans lequel le listel (7) est fixé par collage dans la couche intermédiaire (3).

8. Procédé pour la fabrication d'un panneau (1) destiné à un parquet, dans lequel après assemblage d'un revêtement de marche (2) en bois dur avec une couche intermédiaire (3) ainsi qu'une couche de base (4) à partir de bois plus mous par rapport au matériau du revêtement de marche (2) sur au moins un côté (19) du panneau (1) à partir de la couche intermédiaire (3), il est formé une languette d'arrêt (5) et sur le côté opposé (8) il est fabriqué en marge une gorge (9) s'étendant de façon inclinée par rapport à la surface (10) du revêtement de marche (2), gorge dans laquelle est inséré et fixé consécutivement un listel (7) en un matériau plus dur que le matériau de la couche intermédiaire (3), après quoi par une opération par enlèvement de copeaux de la couche intermédiaire (3) et du listel (7) il est fabriqué un logement d'arrêt (6) adapté à la languette d'arrêt (5).
